# EUROPÄISCHE PATENTSCHRIFT

(11) **EP 3 172 258 B1**
(45) Veröffentlichungstag und Bekanntmachung des Hinweises auf die Patenterteilung: **02.01.2019**
(21) Anmeldenummer: 15735699.9
(22) Anmeldetag: 08.07.2015
(51) Int. Cl.: C08G 63/88, B29B 9/16

(54) **VERFAHREN UND ANLAGE ZUR HERSTELLUNG VON PET-GRANULAT**
PROCESS AND INSTALLATION FOR PRODUCING PET PELLETS
PROCÉDÉ ET INSTALLATION DE FABRICATION DE GRANULÉS DE PET

(30) Priorität: 22.07.2014 DE 102014110337
(43) Veröffentlichungstag der Anmeldung: 31.05.2017
(73) Patentinhaber: Technip Zimmer GmbH, 60439 Frankfurt am Main (DE)
(72) Erfinder: BORMANN, Andreas, 60389 Frankfurt (DE); KRIESCHE, Gerald, 63322 Rödermark (DE); REISEN, Michael, 60438 Frankfurt am Main (DE)
(74) Vertreter: KNH Patentanwälte Neumann Heine Taruttis PartG mbB
(86) Internationale Anmeldenummer: PCT/EP2015/065631
(87) Internationale Veröffentlichungsnummer: WO 2016/012244

(56) Entgegenhaltungen:
- EP-B1- 1 608 696

## Beschreibung

### Gebiet der Erfindung

Die Erfindung betrifft ein Verfahren zur Herstellung von PET (= Polyethylenterephthalat)-Granulat, geeignet zur Weiterverarbeitung zu Verpackungsfolie und Flaschen, umfassend die Schritte:
- Herstellung einer PET-Schmelze oder PET-Copolyester-Schmelze in einer einsträngigen, kontinuierlichen Polymerisationsanlage, entweder durch Umesterung von Dimethylterephthalat (DMT) mit Ethylenglycol (EG) oder durch Veresterung von (faser-)reiner Terephthalsäure (Purified Terephthalic Acid, PTA) mit Ethylenglycol,
- Transport der PET-Schmelze zur Granulierung, beispielsweise durch eine Rohrleitung,
- Granulierung der Schmelze unter Abkühlung zu einem Rohgranulat, wobei unter Freisetzung eines Teils der Kristallisationswärme des Polymers eine Teilkristallisation des Polymers erfolgt (Latentwärmekristallisation),
- Nachbehandlung des Rohgranulats zur Einstellung der für die Weiterverarbeitung erforderlichen Polymerqualitätswerte, insbesondere der intrinsischen Viskosität, des Acetaldehyd- und des Feuchtegehaltes.

Die Erfindung betrifft ebenso eine Anlage zur Durchführung des Verfahrens.

### Stand der Technik

Verfahren zur Verfahren zur Herstellung von PET-Granulat, geeignet zur Weiterverarbeitung zu Verpackungsfolie und Flaschen, sind grundsätzlich bekannt. Die im ersten Schritt, in dem aus den Grundstoffen DMT/EG oder PTA/EG eine Polymerschmelze erzeugt wird, anwendbaren Verfahren sind z. B. in Ullmann's Encyclopedia of Industrial Chemistry, 6th Edition, Vol. 28, S. 238 bis 240 beschrieben. Für die Anwendungszwecke Verpackungsfolien und Getränkeflaschen wird dabei eine intrinsische Viskosität von 0,75 - 0.84 dl/g in der erzeugten Schmelze angestrebt. Zur Einstellung bestimmter Eigenschaften werden häufig Copolyester neben PTA und Monoethylenglycol (MEG), bestehend aus 0 bis 15% Isophthalsäure und/oder 0 bis 2% Diethylenglycol (DEG) und/oder 0 bis 5% 1,4-Cyclohexandimethanol (CHDM), eingesetzt. Diese Schmelze wird aus der Polykondensationsanlage durch eine Rohrleitung in eine Anlage zur Erzeugung und Behandlung von PET-Granulat gefördert. Die Schmelze wird in einer derartigen Anlage durch eine mehrlöchrige Düse ausgepresst, mit Wasser abgekühlt und durch direkt an der Düsenplatte rotierende Messer zu Granulat zerkleinert. Anschließend wird das Wasser so schnell wieder vom Granulat entfernt, dass nur die oberflächliche Randzone der Granulatkörner abgeschreckt wird und im Kern der Körner genügend Wärme aus dem Schmelzezustand vorhanden bleibt, so dass eine Teilkristallisation des Polymers erfolgt. Dieses Verfahren wird häufig als Latentwärmekristallisationsverfahren bezeichnet. Es ist z. B. in EP 1 608 696 B1 beschrieben.

Das teilkristallisierte Granulat wird zunächst in einen Behälter gefüllt, wobei die Granulattemperatur im Allgemeinen noch über 160 °C beträgt. Aus dem Behälter heraus wird es in einen Wanderbettrohrreaktor zur Nachbehandlung gefördert. Dafür hat sich die Verwendung einer pneumatischen Förderung bewährt. Um eine Abkühlung des Granulats zu vermeiden, erfolgt die Förderung mit entsprechend erwärmter Luft oder erwärmtem Inertgas.

Es wird angestrebt, dass das Granulat mit mindestens 160 °C in den zur Nachbehandlung verwendeten Wanderbettrohrreaktor gelangt. Die Nachbehandlung dient der Einstellung der intrinsischen Viskosität und/oder der Senkung des Acetadehydgehaltes des Polymers und/oder der Einstellung eines definierten Feuchtegehalts, entsprechend den Erfordernissen der Weiterverwendung, für die das Polymer vorgesehen ist. Für die Weiterbehandlung haben sich kontinuierliche Verfahren bewährt, bei denen das Granulat in einem Wanderbettrohrreaktor im Gegenstrom von einem Prozessgas durchströmt wird.

Um die Wirtschaftlichkeit einer nach diesem Verfahren arbeitenden Produktionsanlage zu gewährleisten, ist es erforderlich, die Anlage auf eine möglichst große Produktionskapazität hin auszulegen. Dies führt dazu, da jeweils nur eine Produktqualität erzeugt wird und dass in Kampagnen produziert werden muss, um die Abnehmer mit unterschiedlichen Produktqualität beliefern zu können. Das wiederum erfordert große Lagerkapazität für das Endprodukt und führt zur Produktion großer Abfallmengen bei der Umstellung der Produktqualität.

### Beschreibung der Erfindung

Die beschriebenen Nachteile des Stands der Technik werden durch ein Verfahren und eine Anlage gemäß den Merkmalen der unabhängigen Ansprüche 1 und 9 vermieden.

### Erfindungsgemäßes Verfahren:

Verfahren zur Herstellung von Polyethylenterephthalat (PET)-Granulat, geeignet zur Weiterverarbeitung zu Verpackungsfolie und Flaschen, umfassend die Schritte:
a) Herstellung einer PET-Schmelze oder PET-Copolymer-Schmelze in einer einsträngigen kontinuierlichen Polymerisationsanlage, entweder durch Umesterung von Dimethylterephthalat (DMT) mit Ethylenglycol (EG) oder durch Veresterung von Terephthalsäure (PTA) mit Ethylenglycol,
b) Transport der Schmelze, bevorzugt durch eine Rohrleitung, zur weiteren Behandlung in Schritt c),
c) Granulierung der Schmelze unter Abkühlung zu einem Rohgranulat, wobei unter Freisetzung eines Teils der Kristallisationswärme des Polymers eine Teilkristallisation des Polymers erfolgt (Latentwärmekristallisation),
d) Nachbehandlung des Rohgranulats zur Einstellung der für die Weiterverarbeitung erforderlichen Polymerqualitätswerte, insbesondere der intrinsischen Viskosität, des Acetaldehyd- und des Feuchtegehaltes, dadurch gekennzeichnet, dass die Nachbehandlung in mehreren, parallel betriebenen Wanderbettrohrreaktoren erfolgt, wobei die Verweilzeit des Granulats im Reaktor, die Art und chemische Zusammensetzung des Prozessgases, sowie dessen Temperatur und Taupunkt am Eintritt in den Reaktor für jeden der Reaktoren individuell eingestellt werden.

### Erfindungsgemäße Anlage:

Die erfindungsgemäße Anlage umfasst folgende Anlagenteile:
- einen Anlagenteil zur Erzeugung einer PET-Schmelze aus den Rohstoffen DMT/EG oder PTA/EG,
- eine Fördervorrichtung zum Transport der erzeugten PET-Schmelze in die Anlage zur Erzeugung von teilkristallisiertem PET-Granulat,
- einen Anlagenteil zur Erzeugung von teilkristallisiertem PET-Granulat,
- eine Fördervorrichtung für das teilkristallisierte Polymergranulat,
- mindestens zwei Anlagenteile zur Nachbehandlung des Granulats, jeweils umfassend einen Wanderbettrohrreaktor und Vorrichtungen zum Fördern, Einleiten und Ausleiten des Prozessgases.

Bevorzugte Ausgestaltungen der Erfindung sind den abhängigen Ansprüchen 2 bis 7 zu entnehmen.

Die Erfindung ermöglicht es, die für den Verfahrensschritt a) des Anspruchs 1 erforderliche, kontinuierlich produzierende Polymerisationsanlage, die besonders hohe Investitionskosten erfordert, einsträngig und mit einer großen, z. B. 600 t oder sogar 1500 t Polymer pro 24 Betriebsstunden betragenden Produktionskapazität auszulegen. Eine derartige Polymerisationsanlage ist üblicherweise als Reaktorkaskade mit vier oder fünf Reaktoren ausgestaltet.

In diesem Verfahrensschritt wird dabei Polymer in einer Grundqualität erzeugt, von der ausgehend in der Nachbehandlung unterschiedliche, marktübliche Endqualitäten eingestellt werden können.

Die Polymerschmelze wird, aus dem letzten Reaktor der Polymerisationsanlage kommend, in eine nach dem Latentwärmekristallisationsverfahren arbeitende Granulations- und Kristallisationsanlage überführt.

Da die Produktionsleistung dieser Anlagen nicht die der großen Polymerisationsanlagen erreicht, werden oft mehrere Granulations- und Kristallisationsanlagen parallel betrieben. Diese Anlagen wandeln die aus einer mehrlöchrigen Düse ausgepresste Polymerschmelze in ein teilkristallisiertes Polymergranulat um.

Das teilkristallisierte Granulat wird in einen Behälter gefüllt, aus dem heraus es zum Beispiel mit einer pneumatischen Förderanlage zur Nachbehandlung in die parallel aufgestellten Festbettschachtreaktoren überführt wird.

Eine spezielle Ausgestaltung der Erfindung besteht darin, dass die Polymerisation des PET in Schritt a) bis zur Einstellung einer intrinsischen Viskosität im Bereich 0,70 bis 0,80 dl/g erfolgt. Damit ist eine Grundqualität des Polymers eingestellt, von der ausgehend in der Nachbehandlung die meisten marktüblichen Endqualitäten für die Anwendungen Getränkebehälter und Verpackungsfolien erzeugt werden können.

Eine weitere spezielle Ausgestaltung der Erfindung besteht darin, dass die Granulierung und Kristallisation gemäß Schritt c) des Anspruchs 1 mehrsträngig erfolgt, wobei in den jeweiligen Strang Additiv zur Beeinflussung der Polymerqualität eingespeist wird. Das Additiv kann dabei beispielsweise in die entsprechende Rohrleitung zugegeben werden. Ebenso kann auf diese Weise ein Recyclatstrom eindosiert werden, um Produktionsreste oder vorgereinigte, zerkleinerte und aufgeschmolzene PET Flaschenabfälle aufzuarbeiten. Die Additive können dabei dass die entweder direkt oder eingebettet in eine Polymermatrix in den PET-Strom eingebracht werden. Geeignete Additive sind beispielsweise Farbzusätze, wie Bluetoner, Phosphorstabilisatoren gegen das Vergilben des PET, Comonomere und/oder Acetaldehydfänger. Die Additive können entweder direkt oder eingebettet in eine Polymermatrix in den PET-Strom eingebracht werden. Auf diese Weise können mit technisch geringem Aufwand mehrere Polymergrundqualitäten parallel erzeugt werden.

Eine weitere spezielle Ausgestaltung der Erfindung besteht darin, dass in Schritt d) des Anspruchs 1 in mindestens einem der Wanderbettrohrreaktoren die Nachbehandlung des Rohgranulats mit dem Ziel der Senkung des Acetaldehydgehaltes im Granulat erfolgt, wobei als Prozessgas Luft mit einer Eintrittstemperatur zwischen 160 und 200°C, bevorzugt 180 und 190°C in den Reaktor eingeleitet wird. Da das latentwärmekristallisierte Granulat mit einer Temperatur von ca. 160 °C, die es aus der Latentwärmekristallisierung behalten hat, in den Wanderbettrohrreaktor gelangt, braucht es für diese Nachbehandlung nur um wenige °C erwärmt zu werden. Der Taupunkt des Prozessgases wird dabei so eingestellt und kontrolliert, dass die intrinsische Viskosität des Polymers während dieser Nachbehandlung konstant bleibt.

Eine weitere spezielle Ausgestaltung der Erfindung besteht darin, dass in Schritt d) des Anspruchs 1 in mindestens einem der Wanderbettrohrreaktoren die Nachbehandlung des Rohgranulats mit dem Ziel der Erhöhung der intrinsischen Viskosität um bis zu 0,1 dl/g erfolgt, wobei als Prozessgas Luft mit einer Eintrittstemperatur in den Reaktor zwischen 160 und 190°C und einem geregeltem Taupunkt von unter - 15°C verwendet wird.

Eine weitere spezielle Ausgestaltung der Erfindung besteht darin, dass in Schritt d) des Anspruchs 1 in mindestens einem der Wanderbettrohrreaktoren die Nachbehandlung des Rohgranulats mit dem Ziel der Erhöhung der intrinsischen Viskosität um mehr als 0,1 dl/g erfolgt, wobei als Prozessgas Inertgas, bevorzugt Stickstoff, mit einer Eintrittstemperatur in den Reaktor zwischen 150 und 230°C und einem Taupunkt von unter - 15°C verwendet wird. Aufgrund der hohen Prozessgastemperaturen von über 190°C empfiehlt es sich, sauerstofffreies Prozessgas zu verwenden, um eine oxidative Schädigung und damit verbundene Gelbfärbung des Polymers zu vermeiden. Dieses Verfahren wird auch häufig als Festphasenkondensation bezeichnet.

### Ausführungsbeispiele

Weitere Merkmale, Vorteile und Anwendungsmöglichkeiten der Erfindung ergeben sich auch aus der nachfolgenden Beschreibung eines Ausführungsbeispiels und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Anhand der Zeichnung soll die Erfindung näher erläutert werden. Es zeigen:
- Fig. 1: das Blockschema eines Verfahrens bzw. einer Anlage zur Erzeugung von nachbehandeltem PET-Granulat nach dem Stand der Technik,
- Fig. 2, 3: jeweils ein Blockschema des erfindungsgemäßen Verfahrens bzw. einer erfindungsgemäßen Anlage.

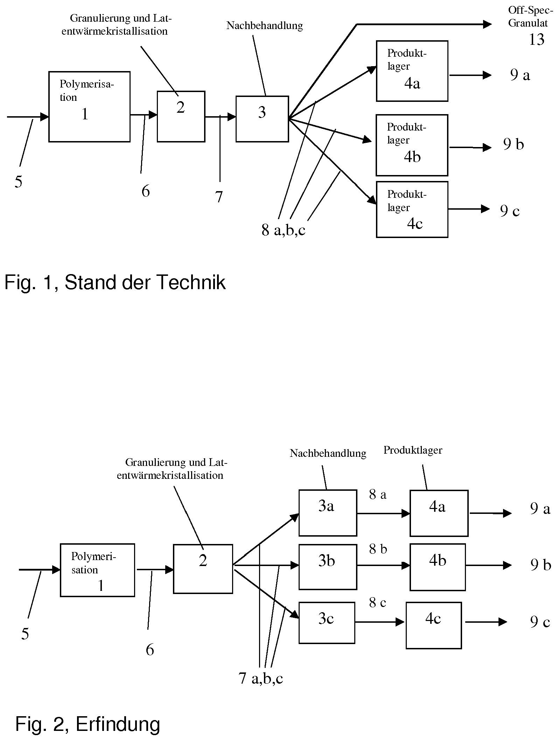

Fig. 1 zeigt, gemäß dem Stand der Technik, wie die Edukte, 5, PTA/EG oder DMT/EG in die einsträngige, kontinuierlich produzierende Polykondensationsanlage, 1, gegeben werden und zu einer PET-Schmelze, 6, umgewandelt werden. Die Produktionskapazität der Anlage 1 beträgt 600 t PET-Schmelze/Tag. Nicht dargestellt ist, dass dabei die Additive, z.B. wie Isophthalsäure und Katalysatoren, wie z.B. Antimon, verwendet werden, die zur Einstellung einer Polymergrundqualität in der Schmelze, 6, erforderlich sind, um das Polymer für die Herstellung von Getränkebehältern und Verpackungsfolie geeignet zu machen. Ein geeigneter IV-Wert (Intrinsische Viskosität) der Schmelze 6 für diesen Zweck beträgt 0,75 dl/g.

Der Begriff "Qualität" ist hier und im Folgenden nicht im Sinne von "gut" oder "schlecht" zu verstehen, sondern für "Sorte" oder "Art".

Die Schmelze 6 wird mittels einer Pumpe durch eine Rohrleitung in eine Anlage zur Granulierung und Latentwärmekristallisation 2 transferiert. In der Zeichnung ist nicht dargestellt, dass diese Anlage zwei parallel produzierende Apparate zur Granulierung und Latentwärmekristallisation umfasst. In dieser Anlage wird die PET-Schmelze in teilkristallines PET-Granulat umgewandelt. Das Granulat wird dabei auf eine Temperatur im Bereich von 160 bis 180°C abgekühlt. Das produzierte Granulat beider Apparate wird in einen gemeinsamen Behälter (nicht dargestellt) transferiert und von dort aus, mit einer pneumatischen Förderung 7, in die Anlage zur Nachbehandlung 3 gefördert.

Um einen Temperaturverlust des Granulats zu vermeiden, erfolgt die pneumatische Förderung mit entsprechend temperiertem Gas.

Die Nachbehandlung 3 wird nach Stand der Technik in einer einsträngigen, kontinuierlich arbeitenden Anlage kampagnenweise durchgeführt, die einen Wanderbettrohrreaktor umfasst.

Ein häufig angewandtes Nachbehandlungsverfahren ist die Dealdehydisierung, die der weitgehenden Entfernung von Aldehyden aus dem Polymer dient. Dies ist in vielen Fällen erforderlich, wenn das Polymer zu Getränkeflaschen verarbeitet werden sollen, da Aldehyde den Geschmack der Getränke negativ beeinflussen. Bei diesem Nachbehandlungsverfahren beträgt die Verweilzeit des Granulats im Wanderbettrohrreaktor zwischen 8 und 15 Stunden, in vielen Fällen 12 Stunden. Das Wanderbett wird von Prozessgas durchströmt, dessen Temperatur so eingestellt ist, dass die Temperatur des Granulats zwischen 160 und 190°C liegt. In diesem Temperaturbereich wird häufig Luft als Prozessgas verwendet.

Ein weiteres häufig angewandtes Nachbehandlungsverfahren ist die Einstellung einer bestimmten intrinsischen Viskosität. Die Änderung der intrinsischen Viskosität des Polymers bei einer derartigen Behandlung durch die Feuchte des Prozessgases beeinflusst wird. In Tabelle 1 ist dieser Zusammenhang beispielhaft für eine Temperatur und Verweilzeit dargestellt. Bei der Dealdehydisierung wird eine Konstanz der intrinsischen Viskosität angestrebt und der Taupunkt des Prozessgases entsprechend eingestellt.

Wenn als Ziel der Nachbehandlung die geringe Anhebung der intrinsischen Viskosität, d.h. um höchsten 0,1 dl/g, im Vordergrund steht, wird in gleicher Weise verfahren. Der Taupunkt des Prozessgases wird in entsprechender Weise niedriger eingestellt.

Häufig wird eine Anhebung der intrinsischen Viskosität des Polymers durch die Nachbehandlung bis auf 0,95 dl/g angestrebt. In diesen Fällen ist es günstig, um die Verweilzeit des Granulats im Reaktor in Grenzen zu halten, die Temperatur des Granulats, im Bereich 200 bis 230°C einzustellen. Es hat sich bewährt, in diesem Temperaturbereich als Prozessgas ein Inertgas, wie z.B. Stickstoff einzusetzen. Der Taupunkt des Prozessgases wird analog zu Tabelle 1 entsprechend niedrig eingestellt.

**Tabelle 1: Änderung der intrinsischen Viskosität, Δ IV, des PET in Abhängigkeit vom Taupunkt des Prozessgases bei 12 Stunden Verweilzeit und 180°C Granulattemperatur**

| **Δ IV[dl/g]** | **Taupunkt [°C]** |
|---|---|
| 0,08 | - 40 |
| 0,05 | - 30 |
| 0,03 | - 20 |
| 0,00 | - 15 |
| - 0,05 | 0 |
| - 0,09 | 10 |
| - 0,1 | 20 |

Das nachbehandelte PET-Granulat wird in das Produktlager 4 gefördert, 8. Die unterschiedlichen erzeugten Polymerqualitäten werden separat gelagert, 4a, 4b, 4c. Da beim Umstellen des Nachbehandlungsverfahrens auf eine andere Polymerqualität große Granulatmengen in nicht spezifikationsgerechter, sogenannter Off Spec-Qualität anfallen, sind solche Umstellungen möglichst zu vermeiden. Granulat in Off Spec-Qualität hat nur einen sehr geringen Marktwert und führt damit letztlich zu einer Erhöhung der Produktionskosten. Das Off Spec-Granulat 13 wird meistens direkt aus dem Nachbehandlungsreaktor in Transportbehälter, wie z.B. Big Bags, abgefüllt und zur weiteren Behandlung abtransportiert.

Um die Häufigkeit der Umstellungen des Nachbehandlungsverfahrens gering zu halten, müssen die Produktionskampagnen möglichst lang sein, wodurch ein Produktlager mit großer Aufnahmekapazität erforderlich ist. Auch dadurch werden die Produktionskosten erhöht.

Fig. 2 erläutert, wie erfindungsgemäß der Anfall von Off Spec-Granulat weitgehend vermieden wird und wie ein derartiges Verfahren bzw. eine derartige Anlage mit einer kleineren Kapazität des Produktlagers betrieben werden kann.

Fig. 2 zeigt, dass die Nachbehandlung in mehreren, in diesem Beispiel drei, parallel betriebenen Anlagen zur Nachbehandlung 3a, 3b, 3 c durchgeführt wird. Die Anlagen 3a bis 3c können unabhängig voneinander betrieben werden, sodass aus einer Grundqualität 7a, 7b, 7c, drei verschiedene Polymerqualitäten 8a, 8b, 8c, gleichzeitig erzeugt werden können. Die Polymerqualitäten 8a bis 8c werden separat gelagert, 4a, 4b, 4c und, durch die Ströme 9a, 9b, 9c dargestellt, aus dem jeweiligen Lager zur Weiterverarbeitung transportiert. Das Produktlager kann kleiner ausgeführt werden als nach dem Verfahren gemäß Fig. 1, weil jetzt nicht mehr die Länge der Produktionskampagnen für die Auslegung der Lagerkapazität ausschlaggebend ist, sondern nur noch die Logistik für den Abtransport des Granulats zur Weiterverarbeitung.

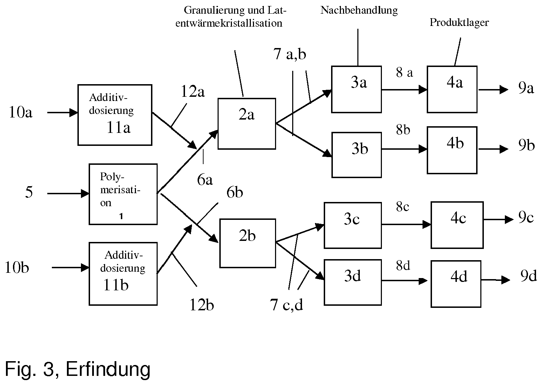

Fig. 3 zeigt ein Beispiel für eine Variante der Erfindung bei der die Produktqualität, außer durch die Nachbehandlung, verändert werden kann, indem in die Polymerleitung 6a, 6b, die von der Polykondensationsanlage in die Granulierungsanlage führt, ein Additiv eingespeist und dabei in die Polymerschmelze eingemischt wird. Das Einmischen kann durch das bloße Einführen des Additivstroms 12a, 12b in den Polymerstrom 6a, 6b erfolgen oder die Vermischung kann durch in der Polymerleitung 6a, 6b installierte Mischer unterstützt werden.

Als Additive, die von den Dosieranlagen 11a, 11b über die Leitungen 12a, 12b in die Polymerleitungen bzw. -ströme 6a, 6b eingespeist werden, kommen beispielsweise Farbzusätze, wie sogenannte Bluetoner, Stabilisatoren, wie Phosphorverbindungen, Diethylenglycol, IPA oder andere Comonomere, Aldehydfänger und Recyclate, d. h. zerkleinertes, z. B. aus gebrauchten Flaschen hergestelltes Polymermaterial, in Frage.

### Bezugszeichenliste

- 1: Polymerisationsanlage
- 2: a und b, Anlage zur Granulierung und Latentwärmekristallisation
- 3: a bis d, Anlage zur Nachbehandlung
- 4: a bis d, Lager für nachbehandeltes Granulat
- 5: PTA/EG oder DMT/EG
- 6: a und b, Transferleitung für Polymerschmelze
- 7: a bis d, pneumatische Förderung des Granulats
- 8: a bis d, Förderung des Granulats ins Lager
- 9: a bis d, Förderung des Granulats zur Weiterverarbeitung
- 10: a und b, Additive
- 11: a und b, Anlage zur Dosierung von Additiven
- 12: a und b, Rohrleitung zur Einspeisung der Additive in die Transferleitung
- 13: Off Spec-Granulat

## Patentansprüche

1. Verfahren zur Herstellung von Polyethylenterephthalat (PET)-Granulat, geeignet zur Weiterverarbeitung zu Verpackungsfolie und Flaschen, umfassend die Schritte:
a) Herstellung einer PET-Schmelze oder PET-Copolymer-Schmelze in einer einsträngigen kontinuierlichen Polymerisationsanlage, entweder durch Umesterung von Dimethylterephthalat (DMT) mit Ethylenglycol (EG) oder durch Veresterung von Terephthalsäure (PTA) mit Ethylenglycol,
b) Transport der Schmelze, bevorzugt durch eine Rohrleitung, zur weiteren Behandlung in Schritt c),
c) Granulierung der Schmelze unter Abkühlung zu einem Rohgranulat, wobei unter Freisetzung eines Teils der Kristallisationswärme des Polymers eine Teilkristallisation des Polymers erfolgt (Latentwärmekristallisation),
d) Nachbehandlung des Rohgranulats zur Einstellung der für die Weiterverarbeitung erforderlichen Polymerqualitätswerte, insbesondere der intrinsischen Viskosität, des Acetaldehyd- und des Feuchtegehaltes, **dadurch gekennzeichnet, dass** die Nachbehandlung in mehreren, parallel betriebenen Wanderbettrohrreaktoren erfolgt, wobei die Verweilzeit des Granulats im Reaktor, die Art und chemische Zusammensetzung des Prozessgases, sowie dessen Temperatur und Taupunkt am Eintritt in den Reaktor für jeden der Reaktoren individuell eingestellt werden.

2. Verfahren nach Anspruch 1, **dadurch gekennzeichnet, dass** die Polykondensation des PET in Schritt a) bis zur Einstellung einer intrinsischen Viskosität im Bereich 0,70 bis 0,80 dl/g erfolgt.

3. Verfahren gemäß Anspruch 1, **dadurch gekennzeichnet, dass** Schritt c) mehrsträngig erfolgt, wobei in den jeweiligen Strang ein Additiv zur Beeinflussung der Polymerqualität oder ein Recyclatstrom eingespeist wird.

4. Verfahren nach einem der vorhergehenden Ansprüche, **dadurch gekennzeichnet, dass** die in Schritt b) zugegebenen Additive entweder direkt oder eingebettet in eine Polymermatrix in den PET-Strom eingebracht werden.

5. Verfahren nach einem der vorhergehenden Ansprüche, **dadurch gekennzeichnet, dass** es sich bei den in Schritt b) zugegebenen Additiven um Farbzusätze, wie Bluetoner, Phosphorstabilisatoren gegen das Vergilben des PET, Co-Monomere und/oder Acetaldehydfänger handelt.

6. Verfahren nach einem der vorhergehenden Ansprüche, **dadurch gekennzeichnet, dass** in Schritt d) des Anspruchs 1 in mindestens einem der Wanderbettrohrreaktoren die Nachbehandlung des Rohgranulats mit dem Ziel der Senkung des Acetaldehydgehaltes im Granulat erfolgt, wobei als Prozessgas Luft mit einer Eintrittstemperatur zwischen 160 und 200°C, bevorzugt 180 und 190°C in den Reaktor eingeleitet wird.

7. Verfahren nach einem der Ansprüche 1 bis 6, **dadurch gekennzeichnet, dass** in Schritt d) des Anspruchs 1 in mindestens einem der Wanderbettrohrreaktoren die Nachbehandlung des Rohgranulats mit dem Ziel der Erhöhung der intrinsischen Viskosität um bis zu 0,1 dl/g erfolgt, wobei als Prozessgas Luft mit einer Eintrittstemperatur in den Reaktor zwischen 160 und 190°C und einem Taupunkt von unter - 15°C verwendet wird.

8. Verfahren nach einem der Ansprüche 1 bis 5, **dadurch gekennzeichnet, dass** in Schritt d) des Anspruchs 1 in mindestens einem der Wanderbettrohrreaktoren die Nachbehandlung des Rohgranulats mit dem Ziel der Erhöhung der intrinsischen Viskosität um mehr als 0,1 dl/g erfolgt, wobei als Prozessgas Inertgas, bevorzugt Stickstoff, mit einer Eintrittstemperatur in den Reaktor zwischen 150 und 230°C und einem Taupunkt von unter - 15°C verwendet wird.

9. Anlage zur Durchführung des Verfahrens gemäß einem der vorhergehenden Ansprüche, umfassend folgende Anlagenteile:
- einen Anlagenteil zur Erzeugung einer PET-Schmelze aus den Rohstoffen DMT/EG oder PTA/EG,
- eine Fördervorrichtung zum Transport der erzeugten PET-Schmelze in die Anlage zur Erzeugung von teilkristallisiertem PET-Granulat,
- einen Anlagenteil zur Erzeugung von teilkristallisiertem PET-Granulat,
- eine Fördervorrichtung für das teilkristallisierte Polymergranulat,
- mindestens zwei Anlagenteile zur Nachbehandlung des Granulats, jeweils umfassend einen Wanderbettrohrreaktor und Vorrichtungen zum Fördern, Einleiten und Ausleiten des Prozessgases.

## Claims

1. Method for preparing polyethylene terephthalate (PET) granulate suitable for further processing to form packaging film and bottles, comprising the steps of:
a) preparing a PET melt or PET copolymer melt in a single-line continuous polymerisation system, either by transesterification of dimethyl terephthalate (DMT) with ethylene glycol (EG) or by esterification of terephthalic acid (PTA) with ethylene glycol,
b) transporting the melt, preferably through a pipeline, for further treatment in step c),
c) granulating the melt while cooling to form a raw granulate, partial crystallisation of the polymer taking place during release of some of the heat of crystallisation of the polymer (latent heat crystallisation),
d) aftertreating the raw granulate in order to adjust the polymer quality values required for the further processing, in particular the intrinsic viscosity, the acetaldehyde content and the moisture content, **characterised in that** the aftertreatment occurs in a plurality of moving-bed tubular reactors operated in parallel, the residence time of the granulate in the reactor, the type and chemical composition of the process gas, and the temperature and dew point thereof at the entrance to the reactor being adjusted individually for each of the reactors.

2. Method according to claim 1, **characterised in that** the polycondensation of the PET in step a) occurs until an intrinsic viscosity in the range of 0.70 to 0.80 dl/g is set.

3. Method according to claim 1, **characterised in that** step c) occurs in multiple lines, an additive for influencing the polymer quality or a recyclate stream being fed into the relevant line.

4. Method according to any of the preceding claims, **characterised in that** the additives added in step b) are introduced into the PET stream either directly or embedded in a polymer matrix.

5. Method according to any of the preceding claims, **characterised in that** the additives added in step b) are dye additives such as blue toners, phosphorous stabilisers to prevent yellowing of the PET, comonomers and/or acetaldehyde scavengers.

6. Method according to any of the preceding claims, **characterised in that** in step d) of claim 1, in at least one of the moving-bed tubular reactors, the raw granulate is aftertreated with the aim of reducing the acetaldehyde content in the granulate, air that has an inlet temperature of between 160 and 200°C, preferably 180 and 190°C, being introduced into the reactor as the process gas.

7. Method according to any of claims 1 to 6, **characterised in that** in step d) of claim 1, in at least one of the moving-bed tubular reactors, the raw granulate is aftertreated with the aim of increasing the intrinsic viscosity by up to 0.1 dl/g, air that has an inlet temperature in the reactor of between 160 and 190°C and a dew point of less than -15°C being used as the process gas.

8. Method according to any of claims 1 to 5, **characterised in that** in step d) of claim 1, in at least one of the moving-bed tubular reactors, the raw granulate is aftertreated with the aim of increasing the intrinsic viscosity by more than 0.1 dl/g, inert gas, preferably nitrogen, that has an inlet temperature in the reactor of between 150 and 230°C and a dew point of less than -15°C being used as the process gas.

9. System for carrying out the method according to any of the preceding claims, comprising the following system components:
- a system component for generating a PET melt from the raw materials DMT/EG or PTA/EG,
- a conveying device for transporting the generated PET melt into the system in order to generate partially crystallised PET granulate,
- a system component for generating partially crystallised PET granulate,
- a conveying device for the partially crystallised polymer granulate,
- at least two system components for aftertreating the granulate, each comprising a moving-bed tubular reactor and devices for conveying, introducing and discharging the process gas.

## Revendications

1. Procédé de production de granulat de téréphtalate de polyéthylène (PET), approprié pour être transformée ultérieurement en film d'emballage et en bouteilles, le procédé comprenant:
a) la production d'une matière PET en fusion ou d'un copolymère PET en fusion dans une installation de polymérisation en continu en une ligne, soit par transestérification de téréphtalate de diméthyle (DMT) avec de l'éthylène glycol (EG), soit par estérification de l'acide téréphtalique (PTA) avec de l'éthylène glycol,
b) le transport de la matière en fusion, de préférence par une canalisation, vers un traitement ultérieur à l'étape c),
c) la granulation de la matière fondue par refroidissement pour donner un granulat brut, la cristallisation partielle du polymère étant effectuée avec libération d'une partie de la chaleur de cristallisation du polymère (cristallisation à chaleur latente),
d) le post-traitement du granulat brut pour ajuster les valeurs de qualité de polymère requises pour un traitement ultérieur, en particulier la viscosité intrinsèque, la teneur en acétaldéhyde et la teneur en humidité, **caractérisé en ce que** le post-traitement est effectué dans plusieurs réacteurs tubulaires à lit mobile fonctionnant en parallèle, le temps de séjour du granulat dans le réacteur, la nature et la composition chimique du gaz de traitement, ainsi que sa température et son point de rosée étant définis individuellement à l'entrée du réacteur pour chacun des réacteurs.

2. Procédé selon la revendication 1, **caractérisé en ce que** la polycondensation du PET à l'étape a) jusqu'à l'obtention d'une viscosité intrinsèque dans la gamme allant de 0,70 à 0,80 dl/g.

3. Procédé selon la revendication 1, **caractérisé en ce que** l'étape c) est effectuée en plusieurs lignes, un additif destiné à influer sur la qualité du polymère ou un flux recyclé étant introduit dans la ligne respective.

4. Procédé selon l'une des revendications précédentes, **caractérisé en ce que** les additifs ajoutés à l'étape b) sont introduits dans le flux de PET soit directement soit étant incorporés dans une matrice polymère.

5. Procédé selon l'une des revendications précédentes, **caractérisé en ce que** les additifs ajoutés à l'étape b) sont des additifs colorants, tels que le Bluetoner, des stabilisants du phosphore destiné à empêcher le jaunissement du PET, des co-monomères et/ou un piégeur d'acétaldéhyde.

6. Procédé selon l'une des revendications précédentes, **caractérisé en ce que** le post-traitement du granulat brut est effectué à l'étape d) de la revendication 1 dans au moins un des réacteurs à tube à lit mobile dans le but de réduire la teneur en acétaldéhyde dans le granulat, de l'air étant introduit comme gaz de traitement dans le réacteur à une température d'entrée comprise entre 160 et 200 °C, de préférence 180 et 190 °C.

7. Procédé selon l'une des revendications 1 à 6, **caractérisé en ce que** le post-traitement du granulat brut est effectué à l'étape d) de la revendication 1 dans au moins un des réacteurs à tube à lit mobile dans le but d'augmenter la viscosité intrinsèque d'une valeur allant jusqu'à 0,1 dl/g, de l'air étant introduit comme gaz de traitement dans le réacteur à une température d'entrée comprise entre 160 et 190 °C et à un point de rosée de moins de -15 °C.

8. Procédé selon l'une quelconque des revendications 1 à 5, **caractérisé en ce que** le post-traitement du granulat brut est effectué à l'étape d) de la revendication 1 dans au moins un des réacteurs à tube à lit mobile dans le but d'augmenter la viscosité intrinsèque d'une valeur de plus de 0,1 dl/g, de l'air étant introduit comme gaz de traitement dans le réacteur à une température d'entrée comprise entre 150 et 230 °C et à un point de rosée de moins de -15 °C.

9. Installation destinée à la mise en oeuvre du procédé selon l'une des revendications précédentes, comprenant les éléments suivants :
- un élément destiné à la production d'une matière PET en fusion à partir des matières premières DMT/EG ou PTA/EG,
- un dispositif de transport destiné à transporter la matière PET en fusion produite jusque dans l'installation destinée à produire le granulat de PET partiellement cristallisés,
- un élément destiné à produire un granulat PET partiellement cristallisé,
- un dispositif de transport du granulat de polymère partiellement cristallisé,
- au moins deux éléments de post-traitement du granulat, chacune comprenant un réacteur tubulaire à lit mobile et des dispositifs de transport, d'introduction et de décharge du gaz de traitement.
